# FASCICULE DE BREVET EUROPEEN

(11) **EP 4 189 224 B1**
(45) Date de publication et mention de la délivrance du brevet: **28.08.2024**
(21) Numéro de dépôt: 21752090.7
(22) Date de dépôt: 21.07.2021
(51) Int. Cl.: F02C 7/224, F02C 3/22

(54) **CIRCUIT D'ALIMENTATION EN CARBURANT DE TURBOMACHINE CRYOGENIQUE AERONAUTIQUE ET PROCEDE ASSOCIE**
KREISLAUF ZUR ZUFÜHRUNG VON KRAFTSTOFF ZU EINER LUFTFAHRT-KRYOTURBOMASCHINE UND ZUGEHÖRIGES VERFAHREN
CIRCUIT FOR SUPPLYING FUEL TO AN AERONAUTICAL CRYOGENIC TURBOMACHINE AND ASSOCIATED METHOD

(30) Priorité: 31.07.2020 FR 2008164
(43) Date de publication de la demande: 07.06.2023
(73) Titulaire: SAFRAN, 75015 Paris (FR); ArianeGroup SAS, 78130 Les Mureaux (FR)
(72) Inventeur: LAMBERT, Pierre-Alain, 77550 MOISSY-CRAMAYEL (FR); JOUAN, Hugo, Pierre, Mohamed, 77550 MOISSY-CRAMAYEL (FR); MAALOUF, Samer, 77550 MOISSY-CRAMAYEL (FR); MABILLE DE LA PAUMELIERE, Louis-Vianney, 27207 VERNON CEDEX (FR); CRUZ, Carlos, Alberto, 27207 VERNON CEDEX (FR); DURI, Davide, 27207 VERNON CEDEX (FR)
(74) Mandataire: Cabinet Beau de Loménie
(86) Numéro de dépôt international: PCT/FR2021/051365
(87) Numéro de publication internationale: WO 2022/023648

(56) Documents cités:
- EP-A1- 3 483 054
- FR-A1- 2 555 666

## Description

### Domaine Technique

La présente invention se rapporte au domaine de la propulsion cryogénique et concerne plus particulièrement un circuit d'alimentation en hydrogène liquide pour turbomachine aéronautique.

### Technique antérieure

Actuellement, dans le domaine aéronautique et pour des raisons d'encombrement et de masse des réservoirs, les architectures connues pour la propulsion d'aéronefs utilisant un carburant cryogénique proposent une alimentation en liquide froid (entre 20 K et 150 K selon la nature du carburant) depuis un réservoir cryogénique avec l'installation d'échangeurs de chaleur entre le carburant et l'air du flux primaire du propulseur principal (notamment dans la tuyère de ce propulseur), pour amener le carburant aux conditions de températures requises pour l'injection dans la chambre de combustion. Ce réchauffage est en effet nécessaire pour se prémunir contre les risques de givrage (en particulier des injecteurs) et pour limiter la quantité d'énergie prélevée dans la chambre de combustion, si celle-ci devait assurer avec les sources chaudes traditionnelles d'un aéronef le réchauffage du carburant. Toutefois, ces échangeurs génèrent des pertes de charge dans le flux primaire qui en réduisant la poussée et le rendement énergétique diminuent l'efficacité énergétique du propulseur principal.

De plus, les entrées thermiques externes au réservoir cryogénique étant transférées vers le carburant liquide, entrainant sa vaporisation, l'isolation thermique de ce réservoir qui fait appel à des technologies de type double enveloppe sous vide est lourde et coûteuse car elle vise à minimiser l'ébullition (ou « boil-off ») du carburant liquide et le débit de gaz généralement très faible est alors évacué vers l'atmosphère ambiante via une soupape de surpression, en cas de pression trop importante dans le réservoir.

Aussi, pour arriver à un compromis acceptable en termes de coût, masse, fiabilité et performance, on a recours à des isolations moins performantes qui vont conduire à augmenter notablement le débit de gaz en ébullition qu'il est alors nécessaire de gérer et en particulier de ne plus ventiler à l'extérieur pour des raisons de sécurité et de coût du carburant, voire d'impact environnemental dans le cas de carburants spécifiques comme les hydrocarbones liquéfiés.

Une solution connue mais coûteuse et complexe de mise en oeuvre est la re-condensation ou la re-liquidification de ce gaz en ébullition. Aussi, un fort besoin s'est exprimé pour une solution alternative moins coûteuse et simple de gestion et de mise en oeuvre. Le document FR2555666A1 divulgue une autre solution connue de l'art antérieur.

### Exposé de l'invention

La présente invention a donc pour but principal de pallier ces inconvénients en proposant un circuit d'alimentation en carburant de turbomachine fonctionnant avec un carburant liquide et dont l'efficacité énergétique est améliorée par un conditionnement du gaz en ébullition qui n'est plus jeté car il représente de la masse, de l'énergie et de l'argent, pour le réinjecter dans le circuit d'alimentation en carburant alimentant les propulseurs de la turbomachine. Un but de l'invention est aussi de permettre d'utiliser ce gaz pour la fourniture de puissance aux pompes du circuit d'alimentation en carburant comme pour la génération de toutes les énergies non propulsives requises par l'aéronef. Un autre but est d'éviter de perdre ce gaz en ébullition sur une grande plage de débit.

Ces buts sont atteints par un circuit d'alimentation en carburant liquide de turbomachine cryogénique aéronautique comportant : au moins un réservoir cryogénique contenant un carburant liquide surmonté par un gaz en ébullition et comportant une pompe liquide haute pression reliée à une sortie dudit réservoir cryogénique pour alimenter au moins un propulseur principal de la turbomachine en carburant liquide, une turbomachine auxiliaire comportant un générateur électrique et produisant de la chaleur via ses gaz d'échappement, un compresseur gazeux monté entre le réservoir cryogénique et la turbomachine auxiliaire pour alimenter en carburant gazeux la turbomachine auxiliaire, et un réservoir de gaz tampon reliant une sortie du compresseur gazeux à une entrée du réservoir cryogénique pour réinjecter du gaz dans le réservoir cryogénique afin de maintenir la pression dans le réservoir cryogénique au-dessus d'une valeur prédéfinie, ledit générateur électrique fournissant en énergie électrique, ladite pompe liquide haute pression et ledit compresseur gazeux.

Ainsi, l'intégration d'une turbomachine auxiliaire qui consomme le gaz en ébullition et qui, insérée dans le circuit d'alimentation en carburant liquide, permet en toute circonstance, par la présence d'un réservoir de gaz tampon, de soutirer le réservoir cryogénique en liquide comme en gaz, améliore notablement l'efficacité de la turbomachine cryogénique aéronautique.

De préférence, le réservoir de gaz tampon est aussi relié à une conduite de gaz reliant le réservoir cryogénique au compresseur gazeux pour permettre le démarrage de la turbomachine auxiliaire depuis le réservoir de gaz tampon.

Selon le mode de réalisation envisagé, le circuit d'alimentation en carburant du propulseur principal peut comporter en outre un premier échangeur thermique entre le carburant gazeux en sortie du compresseur gazeux et les gaz d'échappement de la turbomachine auxiliaire. Le carburant gazeux ainsi chauffé dans le premier échangeur thermique est dirigé vers le propulseur principal de la turbomachine pour être mélangé avec le carburant liquide.

Le circuit d'alimentation peut aussi comporter un second échangeur thermique entre le carburant liquide en sortie de la pompe liquide haute pression et les gaz d'échappement de la turbomachine auxiliaire.

Le circuit d'alimentation peut comporter en outre aussi une canalisation reliant une sortie de la pompe liquide haute pression à une entrée du réservoir cryogénique pour réinjecter du liquide dans ledit réservoir cryogénique.

Avantageusement, ledit carburant liquide est de l'hydrogène liquide.

L'invention concerne également une turbomachine cryogénique aéronautique comportant un circuit d'alimentation en carburant liquide tel que précité ainsi qu'un aéronef comportant au moins une turbomachine cryogénique aéronautique.

L'invention se rapporte aussi à un procédé d'alimentation en carburant de turbomachine cryogénique aéronautique dans lequel une pompe liquide haute pression reliée à une sortie d'un réservoir cryogénique contenant un carburant liquide surmonté par un gaz en ébullition alimente en carburant liquide au moins un propulseur principal de la turbomachine, une turbomachine auxiliaire comportant un générateur électrique produit de la chaleur via ses gaz d'échappement, un compresseur gazeux monté entre le réservoir cryogénique et la turbomachine auxiliaire alimente en carburant gazeux la turbomachine auxiliaire, et un réservoir de gaz tampon reliant une sortie du compresseur gazeux à une entrée du réservoir cryogénique réinjecte du gaz dans le réservoir cryogénique afin de maintenir la pression dans le réservoir cryogénique au-dessus d'une valeur prédéfinie, ledit générateur électrique fournissant en énergie électrique ladite pompe liquide haute pression et ledit compresseur gazeux.

De préférence, ledit générateur électrique fournit aussi en énergie électrique des consommateurs non propulsifs.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 montre un exemple d'un circuit d'alimentation en carburant liquide conforme à l'invention, et
[Fig. 2] la figure 2 illustre une variante à double échangeur de chaleur du circuit d'alimentation de la figure 1.

### Description des modes de réalisation

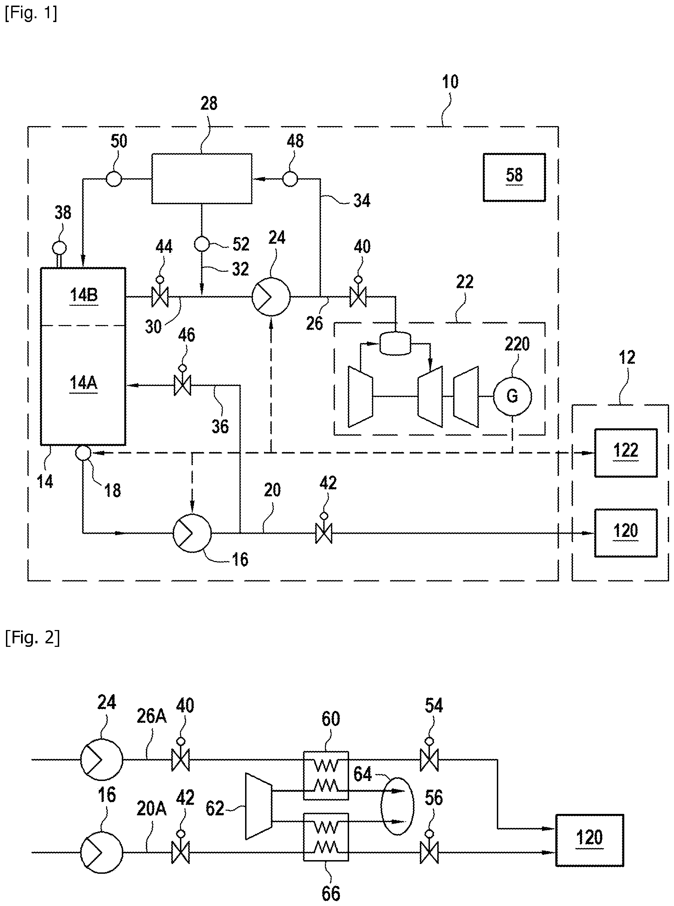

La figure 1 montre de façon schématique un circuit 10 d'alimentation en carburant liquide, typiquement de l'hydrogène liquide, d'une turbomachine aéronautique 12. Comme il est connu, ce circuit d'alimentation comporte un ou plusieurs réservoirs cryogéniques 14 contenant un carburant liquide 14A surmonté par un gaz en ébullition (boil-off) 14B et au moins une pompe liquide haute pression 16 reliée au réservoir cryogénique pour alimenter les propulseurs principaux 120 de la turbomachine 12 via une ligne de liquide principale 20. La pompe liquide haute pression 16 peut être assistée pour soutirer le carburant liquide 14A par une ou plusieurs pompes de gavage 18 immergées dans le réservoir.

Selon l'invention, le circuit d'alimentation comporte en outre une turbomachine auxiliaire 22 appelée PGU (pour « Power Génération Unit) dans la suite de la description, installée à proximité du réservoir et comportant un ou plusieurs générateurs électriques 220 (montés avantageusement sur un arbre basse pression libre du PGU) et produisant de la chaleur via ses gaz d'échappement, un compresseur gazeux 24 monté entre le réservoir cryogénique 14 et la turbomachine auxiliaire 22 pour alimenter en carburant gazeux via une ligne de gaz principale 26 la turbomachine auxiliaire, et un réservoir de gaz tampon 28 reliant une sortie du compresseur gazeux 24 à une entrée du réservoir cryogénique 14 pour réinjecter du gaz dans le réservoir cryogénique afin de maintenir la pression dans le réservoir cryogénique au-dessus d'une valeur prédéfinie (pour de l'hydrogène liquide typiquement 2 bars).

Le ou les générateurs électriques 220 sont reliés à la pompe liquide haute pression 16 (et à ou aux pompes de gavage 18 si présentes) et au compresseur gazeux 24 pour les fournir en énergie électrique et permettre ainsi leur fonctionnement. Plus précisément, ce générateur assure la fourniture d'énergie pour la compression du débit gazeux, dont une partie alimente le PGU en carburant et la fourniture d'énergie à la pompe liquide qui met en pression le liquide et qui soutire ce liquide du réservoir cryogénique. Il assure aussi l'alimentation en énergie des systèmes (charges 122) non propulsifs de l'aéronef (avionique, actionneurs, systèmes cabine...).

Le carburant gazeux délivré via la ligne de gaz principale 26 en sortie du compresseur gazeux 24 et avec lequel la turbomachine auxiliaire 22 fonctionne provient soit du réservoir cryogénique 14 contenant le gaz en ébullition 14B au travers d'une conduite de gaz 30 le reliant au compresseur gazeux 24 soit du réservoir de gaz tampon 28 au travers d'une autre conduite de gaz 32 débouchant dans la conduite de gaz 30 (un piquage réalisé sur la ligne de gaz principale 26 débouche dans le réservoir tampon via une conduite de gaz 34). Ce carburant gazeux (gaz vaporisé issus des deux réservoirs) produit de l'énergie mécanique convertie en électrique grâce au générateur 220 et de la chaleur via les gaz d'échappement.

Un piquage est réalisé sur la ligne de liquide principale 20 en sortie de la pompe liquide haute pression 16 pour, par une canalisation 36, débouchant dans le réservoir cryogénique 14, réinjecter du liquide dans le réservoir cryogénique afin de permettre la mise en froid de ladite pompe et assurer son fonctionnement optimal sur une large plage de débit. Ce réservoir comporte aussi un clapet de surpression 38 pour garantir un éventuel rejet de gaz à l'extérieur.

Bien entendu, diverses vannes 40-56 et capteurs (non illustrés) sont prévus sur ces canalisations et conduites pour assurer le contrôle des débits liquides ou gazeux sont la commande d'une unité de contrôle générale 58.

Comme illustré dans la variante de réalisation de la figure 2, un premier échangeur de chaleur 60 installé dans la tuyère 62 du PGU peut être prévu entre les gaz d'échappement 64 du PGU et le carburant gazeux circulant dans une ligne de gaz secondaire 26A issu d'un piquage de la ligne de gaz principale 26 (ou la ligne de gaz principale 26 elle-même), pour réchauffer le gaz.

Le gaz chauffé peut aussi être mélangé avec le débit cryogénique liquide à la sortie de ce premier échangeur 60 pour obtenir un seul débit plus chaud, ce qui limite la longueur des lignes à l'intérieur desquelles le carburant est très froid et entraine des contraintes thermomécaniques importantes et des risques de fluctuation de débit dans les transitoires, et des risques de givrage de l'ambiance extérieure.

Eventuellement, un second échangeur de chaleur 66 installé également dans la tuyère 62 du PGU peut aussi être prévu, mais cette fois entre ces mêmes gaz d'échappement et le carburant liquide circulant sur la ligne de liquide principale 20, pour réchauffer directement le flux liquide, donc en augmenter la température et ainsi réduire le nombre de lignes très froides et l'énergie à fournir au niveau du propulseur.

Le fonctionnement du circuit d'alimentation est le suivant. Le gaz en ébullition produit dans le réservoir cryogénique 14 est évacué de ce réservoir de manière à maintenir la pression dans ce dernier dans une plage acceptable, et comprimé par le compresseur gazeux 24 qui alimente par la ligne de gaz principale 26 le PGU 22 selon sa sollicitation. Le piquage réalisé sur cette ligne de gaz principale en aval du compresseur gazeux permet d'alimenter le réservoir tampon de gaz comprimé 28 dont la fonction est triple. Tout d'abord, dans le cas où le débit de gaz en ébullition est insuffisant, il permet de réinjecter du gaz dans le réservoir cryogénique 14 pour maintenir la pression au-dessus de la valeur prédéfinie et d'alimenter la ligne de gaz principale alimentant le PGU le temps que le débit du gaz en ébullition retrouve une valeur suffisante. Ensuite, ce réservoir tampon 28 sert à stocker du gaz en attente d'utilisation. Enfin, il sert au démarrage du PGU 22 en injectant du gaz de ce réservoir tampon dans le PGU pour le démarrer. Une fois le PGU démarré, la puissance électrique et thermique est disponible pour alimenter les différentes charges prévues et réchauffer le gaz nécessaire au démarrage du propulseur 12. Plus précisément, le générateur fournit l'électricité nécessaire au fonctionnement du compresseur gazeux 24, des pompes de gavage 18 (si présentes) et liquide 16 et des charges non propulsives 122. Le débit alimentant le PGU est régulé par l'unité de contrôle 56 pour fournir la puissance mécanique requise par le générateur 220. Le reste du débit peut être orienté vers les propulseurs 120 de la turbomachine en passant dans l'échangeur thermique 60 avec les gaz d'échappement du PGU pour augmenter sa température. Le débit liquide est calculé de manière à assurer les besoins en carburant des propulseurs (débit moteur= débit liquide + débit gaz).

Le débit de carburant cryogénique liquide est le complément du débit gazeux pour fournir la quantité de carburant demandé par le système de régulation des moteurs. Ce débit varie grandement au long d'un vol. Cependant la pompe liquide haute pression 16 ne peut fonctionner que dans une plage de débit restreint compte tenu de ses contraintes de marge en stabilité, en sur-débit et en cavitation.

Le débit de carburant gazeux dépend des entrées thermiques et ne peut pas être maitrisé. Si le débit de gaz est supérieur au besoin du PGU et que la pression dans le réservoir tampon est inférieur à la pression de consigne du tampon de gaz, une partie du débit de gaz est dirigée vers le réservoir tampon. Ensuite, le débit nécessaire à alimenter le PGU est dirigé vers ce PGU qui doit fournir l'énergie consommée par les compresseurs, pompes et autres charges non propulsives et s'il en existe le reste du débit gaz est dirigé vers les moteurs.

Le réservoir tampon est utilisé pour pressuriser le réservoir principal. Si la pression dans le réservoir principal est inférieure à sa pression de référence, du gaz stocké à haute pression est transféré depuis le réservoir tampon vers le réservoir principal jusqu'à retrouver la pression de référence.

Au démarrage, du gaz du réservoir tampon est introduit dans la ligne principale de gaz pour alimenter le PGU qui peut ainsi alimenter les pompes et réchauffer le gaz en ébullition via le premier échangeur de chaleur en tuyère.

Avec l'invention, cette turbomachine auxiliaire fonctionne par combustion du carburant gazeux issu d'une partie de ce gaz en ébullition et compressé avant d'être injecté dans sa chambre de combustion. Elle produit de la puissance mécanique convertie en puissance électrique qui alimente les pompes liquides et les compresseurs gazeux, ainsi que les charges non propulsives. Les calories dissipées à son échappement contribuent en outre à réchauffer le carburant du réseau d'alimentation du propulseur principal.

Ainsi, le gaz en ébullition est valorisé et utilisé pour produire une quantité d'énergie suffisante pour assurer le réchauffage et la compression du carburant, et pour alimenter les charges non propulsives en énergie électrique.

## Revendications

1. Circuit d'alimentation en carburant de turbomachine cryogénique aéronautique comportant : au moins un réservoir cryogénique (14) contenant un carburant liquide (14A) surmonté par un gaz en ébullition (14B) et comportant une pompe liquide haute pression (16) reliée à une sortie dudit réservoir cryogénique et destinée à alimenter au moins un propulseur principal (120) de la turbomachine (12) en carburant liquide, une turbomachine auxiliaire (22) comportant un générateur électrique (220) et produisant de la chaleur via ses gaz d'échappement, un compresseur gazeux (24) monté entre le réservoir cryogénique et la turbomachine auxiliaire pour alimenter en carburant gazeux la turbomachine auxiliaire, et un réservoir de gaz tampon (26) reliant une sortie du compresseur gazeux à une entrée du réservoir cryogénique pour réinjecter du gaz dans le réservoir cryogénique afin de maintenir la pression dans le réservoir cryogénique au-dessus d'une valeur prédéfinie, ledit générateur électrique fournissant en énergie électrique ladite pompe liquide haute pression et ledit compresseur gazeux.

2. Circuit d'alimentation en carburant selon la revendication 1, **caractérisé en ce que** le réservoir de gaz tampon (26) est aussi relié à une conduite de gaz (30) reliant le réservoir cryogénique (14) au compresseur gazeux (24) pour permettre le démarrage de la turbomachine auxiliaire depuis le réservoir de gaz tampon.

3. Circuit d'alimentation en carburant selon la revendication 1 ou la revendication 2, **caractérisé en ce qu'**il comporte en outre un premier échangeur thermique (60) entre le carburant gazeux en sortie du compresseur gazeux et les gaz d'échappement de la turbomachine auxiliaire.

4. Circuit d'alimentation en carburant selon la revendication 3, **caractérisé en ce que** le carburant gazeux ainsi chauffé dans le premier échangeur thermique (60) est destiné à être dirigé vers le propulseur principal (120) de la turbomachine pour être mélangé avec le carburant liquide.

5. Circuit d'alimentation en carburant selon la revendication 1 ou la revendication 2, **caractérisé en ce qu'**il comporte en outre un second échangeur thermique (66) entre le carburant liquide en sortie de la pompe liquide haute pression et les gaz d'échappement de la turbomachine auxiliaire.

6. Circuit d'alimentation en carburant selon l'une quelconque des revendications 1 à 5, **caractérisé en ce qu'**il comporte en outre une canalisation (36) reliant une sortie de la pompe liquide haute pression à une entrée du réservoir cryogénique pour réinjecter du liquide dans ledit réservoir cryogénique.

7. Circuit d'alimentation en carburant selon l'une quelconque des revendications 1 à 6, **caractérisé en ce que** ledit carburant liquide est de l'hydrogène liquide.

8. Turbomachine cryogénique aéronautique comportant un circuit d'alimentation en carburant selon l'une quelconque des revendications 1 à 7.

9. Aéronef comportant au moins une turbomachine cryogénique aéronautique selon la revendication 8.

10. Procédé d'alimentation en carburant de turbomachine cryogénique aéronautique dans lequel une pompe liquide haute pression (16) reliée à une sortie d'un réservoir cryogénique (14) contenant un carburant liquide surmonté par un gaz en ébullition alimente en carburant liquide au moins un propulseur principal (120) de la turbomachine (12), une turbomachine auxiliaire (22) comportant un générateur électrique (220) produit de la chaleur via ses gaz d'échappement, un compresseur gazeux (24) monté entre le réservoir cryogénique et la turbomachine auxiliaire alimente en carburant gazeux la turbomachine auxiliaire, et un réservoir de gaz tampon (26) reliant une sortie du compresseur gazeux à une entrée du réservoir cryogénique réinjecte du gaz dans le réservoir cryogénique afin de maintenir la pression dans le réservoir cryogénique au-dessus d'une valeur prédéfinie, ledit générateur électrique fournissant en énergie électrique ladite pompe liquide haute pression et ledit compresseur gazeux.

11. Procédé d'alimentation en carburant selon la revendication 10, **caractérisé en ce que** ledit générateur électrique fournit aussi en énergie électrique des consommateurs non propulsifs (122).

## Patentansprüche

1. Treibstoff-Versorgungskreis für eine kryogene Luftfahrt-Turbomaschine, die beinhaltet: zumindest einen Kryotank (14), der einen flüssigen Treibstoff (14A), der von einem siedenden Gas (14B) überlagert wird, enthält und eine Hochdruck-Flüssigkeitspumpe (16) beinhaltet, die mit einem Ausgang des Kryotanks verbunden und dazu bestimmt ist, zumindest eine Haupt-Schubdüse (120) der Turbomaschine (12) mit flüssigem Treibstoff zu versorgen, eine Zusatz-Turbomaschine (22), die einen elektrischen Generator (220) beinhaltet und über ihre entweichenden Gase Wärme erzeugt, einen Gasverdichter (24), der zwischen dem Kryotank und der Zusatz-Turbomaschine montiert ist, um die Zusatz-Turbomaschine mit gasförmigem Treibstoff zu versorgen, und einen Puffergas-Tank (26), der einen Ausgang des Gasverdichters mit einem Eingang des Kryotanks verbindet, um Gas in den Kryotank wiedereinzuleiten, um den Druck in dem Kryotank über einem vordefinierten Wert zu halten, wobei der elektrische Generator die Hochdruck-Flüssigkeitspumpe und den Gasverdichter mit elektrischer Energie beliefert.

2. Treibstoff-Versorgungskreis nach Anspruch 1, **dadurch gekennzeichnet, dass** der Puffergas-Tank (26) auch mit einer Gasleitung (30) verbunden ist, die den Kryotank (14) mit dem Gasverdichter (24) verbindet, um den Start der Zusatz-Turbomaschine von dem Puffergas-Tank aus zu ermöglichen.

3. Treibstoff-Versorgungskreis nach Anspruch 1 oder Anspruch 2, **dadurch gekennzeichnet, dass** er ferner einen ersten Wärmetauscher (60) zwischen dem gasförmigen Treibstoff an dem Ausgang des Gasverdichters und den entweichenden Gasen der Zusatz-Turbomaschine beinhaltet.

4. Treibstoff-Versorgungskreis nach Anspruch 3, **dadurch gekennzeichnet, dass** der so in dem ersten Wärmetauscher (60) erwärmte gasförmige Treibstoff dazu bestimmt ist, an die Haupt-Schubdüse (120) der Turbomaschine geführt zu werden, um mit dem flüssigen Treibstoff gemischt zu werden.

5. Treibstoff-Versorgungskreis nach Anspruch 1 oder Anspruch 2, **dadurch gekennzeichnet, dass** er ferner einen zweiten Wärmetauscher (66) zwischen dem gasförmigen Treibstoff an dem Ausgang der Hochdruck-Flüssigkeitspumpe und den entweichenden Gasen der Zusatz-Turbomaschine beinhaltet.

6. Treibstoff-Versorgungskreis nach einem der Ansprüche 1 bis 5, **dadurch gekennzeichnet, dass** er ferner einen Kanal (36) beinhaltet, der einen Ausgang der Hochdruck-Flüssigkeitspumpe mit einem Eingang des Kryotanks verbindet, um Flüssigkeit in den Kryotank wiedereinzuleiten.

7. Treibstoff-Versorgungskreis nach einem der Ansprüche 1 bis 6, **dadurch gekennzeichnet, dass** der flüssige Treibstoff flüssiger Wasserstoff ist.

8. Kryogene Luftfahrt-Turbomaschine, die einen Treibstoff-Versorgungskreis nach einem der Ansprüche 1 bis 7 beinhaltet.

9. Luftfahrzeug, das zumindest eine kryogene Luftfahrt-Turbomaschine nach Anspruch 8 beinhaltet.

10. Verfahren zur Treibstoffversorgung einer kryogenen Luftfahrt-Turbomaschine, wobei eine Hochdruck-Flüssigkeitspumpe (16), die mit einem Ausgang eines Kryotanks (14) verbunden ist, der einen flüssigen Treibstoff enthält, der von einem siedenden Gas überlagert ist, zumindest eine Haupt-Schubdüse (120) der Turbomaschine (12) mit flüssigem Treibstoff versorgt, eine Zusatz-Turbomaschine (22), die einen elektrischen Generator (220) beinhaltet, über ihre entweichenden Gase Wärme erzeugt, ein Gasverdichter (24), der zwischen dem Kryotank und der Zusatz-Turbomaschine montiert ist, die Zusatz-Turbomaschine mit gasförmigem Treibstoff versorgt, und ein Puffergas-Tank (26), der einen Ausgang des Gasverdichters mit einem Eingang des Kryotanks verbindet, Gas in den Kryotank wiedereinleitet, um den Druck in dem Kryotank über einem vordefinierten Wert zu halten, wobei der elektrische Generator die Hochdruck-Flüssigkeitspumpe und den Gasverdichter mit elektrischer Energie beliefert.

11. Verfahren zur Treibstoffversorgung nach Anspruch 10, **dadurch gekennzeichnet, dass** der elektrische Generator auch nicht dem Antrieb zugeordnete Verbraucher (122) mit elektrischer Energie versorgt.

## Claims

1. A fuel supply circuit for an aeronautical cryogenic turbomachine including: at least one cryogenic reservoir (14) containing a liquid fuel (14A) topped with a boil-off gas (14B) and including a high-pressure liquid pump (16) connected to an outlet of said cryogenic reservoir and intended to supply at least one main propulsion device (120) of the turbomachine (12) with liquid fuel, an auxiliary turbomachine (22) including an electric generator (220) and producing heat via its exhaust gases, a gas compressor (24) mounted between the cryogenic reservoir and the auxiliary turbomachine to supply the auxiliary turbomachine with gaseous fuel, and a buffer gas reservoir (26) connecting an outlet of the gas compressor to an inlet of the cryogenic reservoir to reinject gas into the cryogenic reservoir in order to maintain the pressure in the cryogenic reservoir above a predefined value, said electric generator supplying electrical energy to said high-pressure liquid pump and said gas compressor.

2. The fuel supply circuit as claimed in claim 1, **characterized in that** the buffer gas reservoir (26) is also connected to a gas duct (30) connecting the cryogenic reservoir (14) to the gas compressor (24) to allow the starting of the auxiliary turbomachine from the buffer gas reservoir.

3. The fuel supply circuit as claimed in claim 1 or claim 2, **characterized in that** it further includes a first heat exchanger (60) between the gaseous fuel at the outlet of the gas compressor and the exhaust gases of the auxiliary turbomachine.

4. A fuel supply circuit as claimed in claim 3, **characterized in that** the gaseous fuel thus heated in the first heat exchanger (60) is intended to be directed to the main propulsion device (120) of the turbomachine to be mixed with the liquid fuel.

5. The fuel supply circuit as claimed in claim 1 or claim 2, **characterized in that** it further includes a second heat exchanger (66) between the liquid fuel at the outlet of the high-pressure liquid pump and the exhaust gases of the auxiliary turbomachine.

6. The fuel supply circuit as claimed in any of claims 1 to 5, **characterized in that** it further includes a channel (36) connecting an outlet of the high-pressure liquid pump to an inlet of the cryogenic reservoir to reinject liquid into said cryogenic reservoir.

7. The fuel supply circuit as claimed in any of claims 1 to 6, **characterized in that** said liquid fuel is liquid hydrogen.

8. An aeronautical cryogenic turbomachine including a fuel supply circuit as claimed in any of claims 1 to 7.

9. An aircraft including at least one aeronautical cryogenic turbomachine as claimed in claim 8.

10. A fuel supply method for an aeronautical cryogenic turbomachine wherein a high-pressure liquid pump (16) connected to an outlet of a cryogenic reservoir (14) containing a liquid fuel topped by a boil-off gas supplies liquid fuel to at least one main propulsion device (120) of the turbomachine (12), an auxiliary turbomachine (22) including an electric generator (220) produces heat via its exhaust gases, a gas compressor (24) mounted between the cryogenic reservoir and the auxiliary turbomachine supplies gaseous fuel to the auxiliary turbomachine, and a buffer gas reservoir (26) connecting an outlet of the gas compressor to an inlet of the cryogenic reservoir reinjects gas into the cryogenic reservoir in order to maintain the pressure in the cryogenic reservoir above a predefined value, said electric generator supplying electrical energy to said high-pressure liquid pump and said gas compressor.

11. The fuel supply method as claimed in claim 10, **characterized in that** the electric generator also supplies electrical energy to non-propulsive power consumption sources (122).
